# EUROPÄISCHE PATENTANMELDUNG

(11) **EP 4 776 200 A1**
(43) Veröffentlichungstag der Anmeldung: **15.07.2026**
(21) Anmeldenummer: 25221086.9
(22) Anmeldetag: 05.12.2025
(51) Int. Cl.: G06Q 10/0833, G06Q 10/087, H04W 4/80

(54) **VERFAHREN UND STEUEREINHEIT ZUM BETREIBEN EINES LAGERBEHÄLTERS, LAGERBEHÄLTER, VERFAHREN UND STEUEREINHEIT ZUM BETREIBEN EINES MOBILEN ENDGERÄTS, MOBILES ENDGERÄT, VERFAHREN UND STEUEREINHEIT ZUM BETREIBEN EINES HAUSHALTGERÄTS, HAUSHALTGERÄT, VERFAHREN UND STEUEREINHEIT ZUM BETREIBEN EINES HAUSHALTGERÄTESYSTEMS, EXTERNE ZENTRALEINRICHTUNG**

(30) Priorität: 08.01.2025 BE 202500005
(71) Anmelder: Miele & Cie. KG, 33332 Gütersloh (DE)
(72) Erfinder: Westergerling, Mario, 33334 Gütersloh (DE); Franzmeier, Jens, 32052 Herford (DE); Koch, Daniel, 32120 Hiddenhausen (DE); Schmelter, Stefan, 33330 Gütersloh (DE)

(57) **Zusammenfassung**

Verfahren und Steuereinheit zum Betreiben eines Lagerbehälters, Lagerbehälter, Verfahren und Steuereinheit zum Betreiben eines mobilen Endgeräts, mobiles Endgerät, Verfahren und Steuereinheit zum Betreiben eines Haushaltgeräts, Haushaltgerät, Verfahren und Steuereinheit zum Betreiben eines Haushaltgerätesystems, externe Zentraleinrichtung
Die Erfindung betrifft ein Verfahren zum Betreiben eines Lagerbehälters (100), wobei der Lagerbehälter (100) drahtlos mit einem mobilen Endgerät (205) koppelbar oder gekoppelt ist. Das Verfahren umfasst einen Schritt des Aufbauens einer Drahtlosverbindung zwischen dem mobilen Endgerät (205) und dem Lagerbehälter (100). Zusätzlich umfasst das Verfahren einen Schritt des Empfangens von Daten von dem mobilen Endgerät (205), insbesondere wobei die Daten eine Information über in dem Lagerbehälter (100) zu lagernde und/oder lagernde Lebensmittel repräsentiert. Zusätzlich umfasst das Verfahren einen Schritt des Speicherns der Daten in einer Speichereinrichtung einer Komponente des Lagerbehälters (100).

## Beschreibung

Die Erfindung betrifft ein Verfahren und eine Steuereinheit zum Betreiben eines Lagerbehälters, einen Lagerbehälter, ein Verfahren und eine Steuereinheit zum Betreiben eines mobilen Endgeräts, ein mobiles Endgerät, ein Verfahren und eine Steuereinheit zum Betreiben eines Haushaltgeräts, ein Haushaltgerät, ein Verfahren und eine Steuereinheit zum Betreiben eines Haushaltgerätesystems und eine externe Zentraleinrichtung.

Lagerbehälter können mit einem QR-Code versehen sein, um manuell ein Warenwirtschaftssystem aufzubauen.

Der hier vorgestellte Ansatz stellt sich die Aufgabe, ein verbessertes Verfahren und eine verbesserte Steuereinheit zum Betreiben eines Lagerbehälters, einen verbesserten Lagerbehälter, ein verbessertes Verfahren und eine verbesserte Steuereinheit zum Betreiben eines mobilen Endgeräts, ein verbessertes mobiles Endgerät, ein verbessertes Verfahren und eine verbesserte Steuereinheit zum Betreiben eines Haushaltgeräts, ein verbessertes Haushaltgerät, ein verbessertes Verfahren und eine verbesserte Steuereinheit zum Betreiben eines Haushaltgerätesystems und eine verbesserte externe Zentraleinrichtung zu schaffen.

Erfindungsgemäß wird diese Aufgabe durch ein Verfahren und eine Steuereinheit zum Betreiben eines Lagerbehälters, einen Lagerbehälter, ein Verfahren und eine Steuereinheit zum Betreiben eines mobilen Endgeräts, ein mobiles Endgerät, ein Verfahren und eine Steuereinheit zum Betreiben eines Haushaltgeräts, ein Haushaltgerät, ein Verfahren und eine Steuereinheit zum Betreiben eines Haushaltgerätesystems und eine externe Zentraleinrichtung mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen insbesondere darin, dass ein Lagerbehälter geschaffen werden kann, der verschiedene Daten empfängt und auf verschiedene Haushaltgeräte überträgt. Hierdurch können einfach und effizient Informationen über einen Inhalt des Lagerbehälters zwischen unterschiedlichen Instanzen ausgetauscht werden.

Ein Verfahren ist zum Betreiben eines Lagerbehälters vorgesehen, wobei der Lagerbehälter drahtlos mit einem mobilen Endgerät koppelbar oder gekoppelt ist. Das Verfahren umfasst einen Schritt des Aufbauens einer Drahtlosverbindung zwischen dem mobilen Endgerät und dem Lagerbehälter. Zusätzlich umfasst das Verfahren einen Schritt des Empfangens von Daten von dem mobilen Endgerät, insbesondere wobei die Daten eine Information über in dem Lagerbehälter zu lagernde und/oder lagernde Lebensmittel repräsentiert. Zusätzlich umfasst das Verfahren einen Schritt des Speicherns der Daten in einer Speichereinrichtung einer Komponente (wie beispielsweise eines Deckels) des Lagerbehälters. Vorteilhafterweise können somit Rezepte und/oder Daten von Lebensmitteln in dem Lagerbehälter gespeichert werden.

Ein Lagerbehälter ist zum Lagern von Lebensmitteln ausgebildet, wobei der Lagerbehälter in einer Komponente eine Speichereinrichtung zum Speichern von Daten und eine Kommunikationseinrichtung aufweist. Die Kommunikationseinrichtung ist ausgebildet, um eine Drahtlosverbindung mit einem mobilen Endgerät und/oder einem Haushaltgerät aufzubauen, um die in der Speichereinrichtung gespeicherten Daten an das Haushaltgerät auszugeben und/oder um von dem mobilen Endgerät empfangene Daten in der Speichereinrichtung abzuspeichern.

Ein Verfahren ist zum Betreiben eines mobilen Endgeräts ausgebildet, wobei das mobile Endgerät drahtlos mit einer Ausführungsform eines hierin genannten Lagerbehälters koppelbar oder gekoppelt ist. Das Verfahren umfasst einen Schritt des Aufbauens einer Drahtlosverbindung zwischen dem mobilen Endgerät und dem Lagerbehälter. Zusätzlich umfasst das Verfahren einen Schritt des Ausgebens von Daten an den Lagerbehälter, insbesondere wobei die Daten eine Information über in dem Lagerbehälter zu lagernde und/oder lagernde Lebensmittel repräsentiert, um die Daten in einer Speichereinrichtung des Lagerbehälters abzuspeichern. Vorteilhafterweise können somit Rezepte und/oder Daten von Lebensmitteln in dem Lagerbehälter gespeichert werden.

Ein mobiles Endgerät ist zum Übertragen von Daten an eine Ausführungsform eines hierin genannten Lagerbehälters ausgebildet. Das mobile Endgerät weist dazu eine Einrichtung zum Aufbauen einer Drahtlosverbindung zwischen dem mobilen Endgerät und dem Lagerbehälter auf. Zusätzlich weist das mobile Endgerät eine Einrichtung zum Ausgeben von Daten an den Lagerbehälter auf, insbesondere wobei die Daten eine Information über in dem Lagerbehälter zu lagernde und/oder lagernde Lebensmittel repräsentiert, um die Daten in einer Speichereinrichtung des Lagerbehälters abzuspeichern.

Ein Verfahren ist zum Betreiben eines Haushaltgeräts ausgebildet, wobei das Haushaltgerät drahtlos mit einer Ausführungsform eines hierin genannten Lagerbehälters koppelbar oder gekoppelt ist. Das Verfahren umfasst einen Schritt des Aufbauens einer Drahtlosverbindung zwischen dem Lagerbehälter und dem Haushaltgerät. Zusätzlich umfasst das Verfahren einen Schritt des Empfangens von Daten von der Kommunikationseinrichtung des Lagerbehälters. Zusätzlich umfasst das Verfahren einen Schritt des Veränderns von mindestens einem Parameter des Haushaltgeräts ansprechend auf die empfangenen Daten. Zusätzlich oder alternativ umfasst das Verfahren einen Schritt des Ansteuerns des Haushaltgeräts unter Verwendung der empfangenen Daten.

Der Schritt des Ansteuerns kann ausgeführt werden, wenn eine die Speichereinrichtung des Lagerbehälters umfassende Komponente nicht in dem Haushaltgerät angeordnet ist. Auf diese Weise kann der Deckel durch hohe Temperaturen nicht beschädigt werden. Auch kann der Nutzer nicht vergessen den Deckel vom Lagerbehälter zu entnehmen, da mit Deckel keine Ansteuerung des Haushaltgeräts stattfindet.

Der Schritt des Ansteuerns kann eine Parametrierung einer Leistungsabgabe eines als Mikrowellen und/oder Backofen ausgebildeten Haushaltgeräts umfassen.

Der Schritt des Veränderns kann ein Anzeigen einer die Daten repräsentierende Information auf einem Display des Haushaltgeräts umfassen.

Der Schritt des Veränderns kann ein Übertragen von weiteren Daten an den Lagerbehälter umfassen, um die weiteren Daten in die Speichereinrichtung des Lagerbehälters abzuspeichern.

Ein Haushaltgerät ist zum Aufnehmen einer Ausführungsform eines hierin genannten Lagerbehälters ausgebildet. Das Haushaltgerät weist eine Einrichtung zum Aufbauen einer Drahtlosverbindung zwischen dem Lagerbehälter und dem Haushaltgerät auf. Zusätzlich weist das Haushaltgerät eine Einrichtung zum Empfangen von Daten von der Kommunikationseinrichtung des Lagerbehälters auf. Zusätzlich weist das Haushaltgerät eine Einrichtung zum Verändern von mindestens einem Parameter des Haushaltgeräts ansprechend auf die empfangenen Daten auf. Zusätzlich oder alternativ weist das Haushaltgerät eine Einrichtung zum Ansteuern des Haushaltgeräts unter Verwendung der empfangenen Daten auf.

Bei dem Haushaltgerät kann es sich um ein Kühlgerät, eine Mikrowelle und/oder einen Backofen handeln. Bei dem Parameter kann eine Leistung des Haushaltgeräts eingestellt werden, es können weitere Daten auf einer Speichereinrichtung gespeichert werden und/oder Anzeigen auf einem Display des Haushaltgeräts eingestellt werden. Mit dem hier vorgestellten Ansatz kann der Nutzer einen Überblick über sein Lagergut in dem Kühlgerät erhalten. Die Generierung einer Übersicht über Lagergut in einem Kühlgerät kann somit automatisch erfolgen und die Nutzerzufriedenheit erhöhen. Das Aufwärmen in dem Lagerbehälter kann von unten und von oben erfolgen. Der Parameter kann automatisch eingestellt werden, sodass der Nutzer sich nicht fragen muss, bei welcher Temperatur und wie lange die Speise aufgewärmt werden muss, ob er sie auch tiefgekühlt aufwärmen kann oder ob sie erst aufgetaut werden muss.

Ein Verfahren ist zum Betreiben eines Haushaltgerätesystems unter Verwendung einer externen Zentraleinrichtung ausgebildet. Das Verfahren umfasst einen Schritt des Einlesens von Daten von einer Ausführungsform eines hierin genannten mobilen Endgeräts und/oder von einer Ausführungsform eines hierin genannten Haushaltgeräts und/oder einer Ausführungsform eines hierin genannten weiteren Haushaltgeräts. Zusätzlich umfasst das Verfahren einen Schritt des Ausgebens von von dem mobilen Endgerät empfangene Daten an das Haushaltgerät und/oder Ausgeben von von dem Haushaltgerät empfangene Daten an das mobile Endgerät und/oder von von dem weiteren Haushaltgerät empfangene Daten an das mobile Endgerät. Mit dem Haushaltgerätesystem kann ein Eco-System geschaffen werden, Einzellösungen können entfallen.

Eine externe Zentraleinrichtung zum Betreiben eines Haushaltgerätesystems weist eine Ausführungsform eines hierin genannten mobilen Endgeräts und mindestens eine Ausführungsform eines hierin genannten Haushaltgeräts auf.

Der hier vorgestellte Ansatz schafft ferner eine Steuereinheit, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Auch wenn der beschriebene Ansatz anhand eines Haushaltgeräts beschrieben wird, kann der hier beschriebene Ansatz entsprechend im Zusammenhang mit einem gewerblichen oder professionellen Gerät, beispielsweise einem medizinischen Gerät, wie einem Reinigungs- oder Desinfektionsgerät, einem Kleinsterilisator, einem Großraumdesinfektor oder einer Container-Waschanlage eingesetzt werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Ausführungsbeispiels eines Lagerbehälters;
- Figur 2: eine schematische Darstellung eines Haushaltgerätesystems zur Erläuterung eines Ausführungsbeispiels eines Verfahrens zum Betreiben eines Haushaltgerätesystems;
- Figur 3: ein Ablaufdiagramm eines Ausführungsbeispiels eines Verfahrens zum Betreiben eines Lagerbehälters;
- Figur 4: ein Blockschaltbild eines Ausführungsbeispiels einer Steuereinheit zum Betreiben eines Lagerbehälters;
- Figur 5: ein Ablaufdiagramm eines Ausführungsbeispiels eines Verfahrens zum Betreiben eines mobilen Endgeräts;
- Figur 6: ein Blockschaltbild eines Ausführungsbeispiels einer Steuereinheit zum Betreiben eines mobilen Endgeräts;
- Figur 7: ein Ablaufdiagramm eines Ausführungsbeispiels eines Verfahrens zum Betreiben eines Haushaltgeräts;
- Figur 8: ein Blockschaltbild eines Ausführungsbeispiels einer Steuereinheit zum Betreiben eines Haushaltgeräts;
- Figur 9: ein Ablaufdiagramm eines Ausführungsbeispiels eines Verfahrens zum Betreiben eines Haushaltgerätesystems; und
- Figur 10: ein Blockschaltbild eines Ausführungsbeispiels einer Steuereinheit zum Betreiben eines Haushaltgerätesystems.

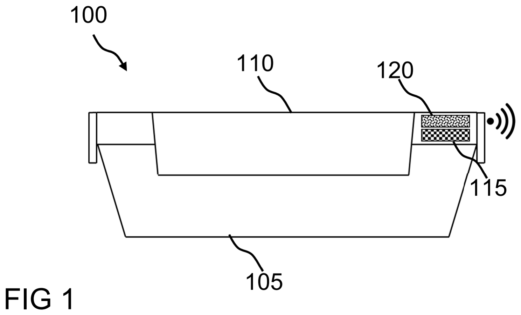

Figur 1 zeigt eine schematische Darstellung eines Ausführungsbeispiels eines Lagerbehälters 100. Der Lagerbehälter 100 ist zum Lagern von Lebensmitteln ausgebildet und weist beispielsweise einen Innenraum 105 und einen den Innenraum 105 verschließenden Deckel 110 sowie eine Speichereinrichtung 115 und eine Kommunikationseinrichtung 120 auf. Lediglich beispielhaft sind die Speichereinrichtung 115 und die Kommunikationseinrichtung 120 in dem Deckel 110 angeordnet. Der Deckel 110 weist beispielsweise einen Verschluss auf, um den Innenraum 105 zuverlässig zu verschließen.

Die Speichereinrichtung 115 ist zum Speichern von Daten ausgebildet und kann auch als Energiespeicher bezeichnet werden. Die Speichereinrichtung 115 umfasst beispielsweise einen Energiespeicher bzw. Akku zum Bereitstellen elektrischer Energie zum Betreiben der Speichereinrichtung 115. Die Kommunikationseinrichtung 120 ist ausgebildet, um eine Drahtlosverbindung mit einem mobilen Endgerät und/oder einem Haushaltgerät aufzubauen, um die in der Speichereinrichtung 115 gespeicherten Daten an das Haushaltgerät auszugeben und/oder um von dem mobilen Endgerät empfangene Daten in der Speichereinrichtung 115 abzuspeichern. Hierzu ist die Kommunikationseinrichtung 120 beispielsweise UWB-fähig ausgebildet und umfasst eine Mikroelektronik.

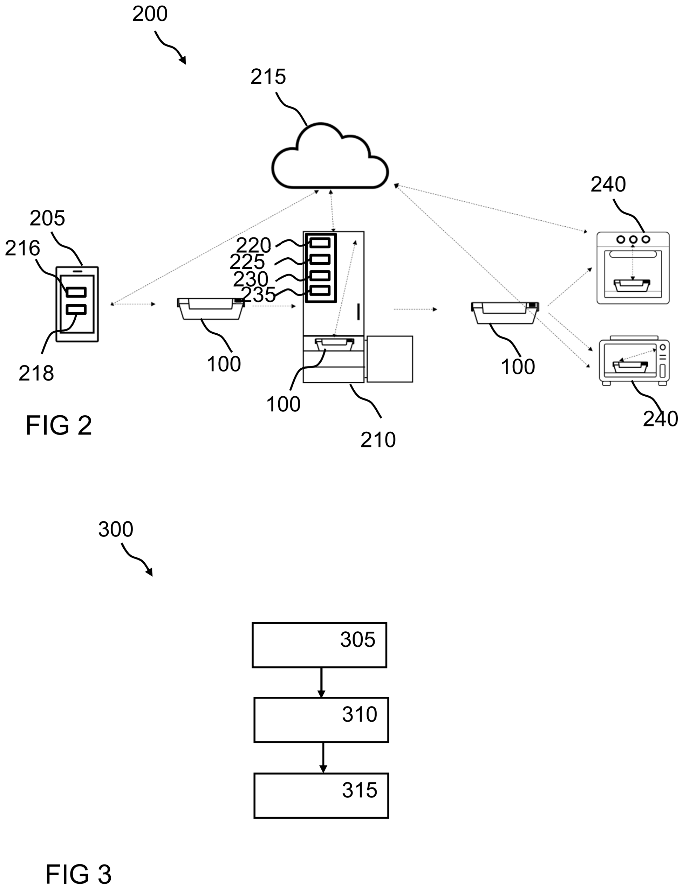

Der Lagerbehälter 100 ist im Zusammenhang mit mindestens einem mobilen Endgerät und/oder mindestens einem Haushaltgerät betreibbar, wie es lediglich beispielhaft in der nachfolgenden Figur 2 gezeigt und näher beschrieben ist.

Figur 2 zeigt eine schematische Darstellung eines Haushaltgerätesystems 200 zur Erläuterung eines Ausführungsbeispiels eines Verfahrens zum Betreiben eines Haushaltgerätesystems 200.

Das Haushaltgerätesystem 200 umfasst ein mobiles Endgerät 205, mindestens ein Haushaltgerät 210, eine externe Zentraleinrichtung 215 und den Lagerbehälter 100, wobei der Lagerbehälter 100 dem Lagerbehälter aus Figur 1 ähnelt oder entspricht.

Das mobile Endgerät 205 ist ausgebildet, um Daten an den Lagerbehälter 100 zu übertragen, wobei es sich bei den Daten beispielsweise um ein Rezept und/oder Zutaten handelt. Bei dem mobilen Endgerät 205 handelt sich beispielsweise um ein Smartphone und bei dem Lagerbehälter 100 beispielsweise um eine Auflaufschlüssel oder einen Aufbewahrungsbehälter. Die Daten werden beispielsweise über eine Funkverbindung, beispielsweise UWB-Verbindung, übertragen. Hierzu weist das mobile Endgerät 205 eine Einrichtung 216 zum Aufbauen einer Drahtlosverbindung zwischen dem mobilen Endgerät 205 und dem Lagerbehälter 100 sowie eine Einrichtung 218 zum Ausgeben von Daten an den Lagerbehälter 100 auf. Zusätzlich werden die Daten, wie beispielsweise Rezepte, Zutaten, Warenwirtschaftssystem, von dem mobilen Endgerät 205 an die externe Zentraleinrichtung 215 ausgegeben und in der externen Zentraleinrichtung 215 gespeichert. Die in der externen Zentraleinrichtung 215 gespeicherten Daten sind beispielsweise von dem mobilen Endgerät abrufbar, beispielsweise um eine Übersicht über das Lagergut zu erhalten. Bei der externen Zentraleinrichtung 215 handelt es sich beispielsweise um eine Cloud.

Der Lagerbehälter 100 ist ausgebildet, um eine Drahtlosverbindung mit dem mobilen Endgerät 205 und/oder dem Haushaltgerät 210 aufzubauen, um die Daten von dem mobilen Endgerät 215 zu empfangen. Zusätzlich ist der Lagerbehälter 100 ausgebildet, um die Daten in der Speichereinrichtung des Lagerbehälters 100 zu speichern und um die gespeicherten Daten an das Haushaltgerät 210 auszugeben.

Gemäß einem Ausführungsbeispiel ist das Haushaltgerät 210 als ein Kühlgerät ausgebildet. Beispielsweise stellt ein Nutzer den mit Lebensmittel gefüllten Lagerbehälter 100 in das Haushaltgerät 210.

Das Haushaltgerät 210 ist ausgebildet, um eine Drahtlosverbindung zwischen Lagerbehälter 100 und dem Haushaltgerät 210 aufzubauen, um die in dem Lagerbehälter 100 gespeicherten Daten zu empfangen. Hierzu weist das Haushaltgerät 210 eine Einrichtung 220 zum Aufbauen der Drahtlosverbindung zwischen dem Lagerbehälter 100 und dem Haushaltgerät 210 sowie eine Einrichtung 225 zum Empfangen von Daten von der Kommunikationseinrichtung des Lagerbehälters 100 auf.

Ansprechend auf die empfangenen Daten ist das Haushaltgerät 210 ausgebildet, um mindestens einen Parameter das Haushaltgerät 210 zu verändern. Hierzu weist das Haushaltgerät 210 eine Einrichtung 230 zum Verändern von mindestens einem Parameter des Haushaltgeräts 210 auf. Bei dem Parameter handelt es sich beispielsweise um eine Kühlleistung oder eine Gefrierleistung das Haushaltgerät 210. Unter Verwendung der empfangenen Daten wird das Haushaltgerät 210 entsprechend angesteuert. Hierzu weist das Haushaltgerät 210 eine Einrichtung 235 zum Ansteuern des Haushaltgeräts 210 auf. In anderen Worten ausgedrückt wird der Lagerbehälter 100 mit implementierten Daten von dem Haushaltgerät 210 erkannt und lokalisiert und mit weiteren Daten angereichert zum Beispiel Ort, Zeit, etc. Auf diese Weise wird beispielsweise ein Warenwirtschaftssystem aufgebaut und der Nutzer erhält eine Übersicht über das Lagergut.

Das Haushaltgerät 210 ist signalübertragungsfähig mit der externen Zentraleinrichtung 215 verbunden, sodass die externe Zentraleinrichtung 215 Daten von dem Haushaltgerät 210 empfängt und diese Daten beispielsweise an mobile Endgerät 205 oder an ein weiteres Haushaltgerät 220 ausgibt.

Gemäß einem Ausführungsbeispiel entnimmt der Nutzer den Lagerbehälter 100 aus dem Haushaltgerät 210, wobei die Entnahme von dem Lagerbehälter 100 erkannt wird. Der Nutzer stellt den Lagerbehälter 100 beispielsweise in ein weiteres Haushaltgerät 240, wobei das weitere Haushaltgerät 240 als eine Mikrowelle oder als ein Backofen ausgebildet ist. Der Lagerbehälter 100 wird von dem weiteren Haushaltgerät 240 erkannt, woraufhin das weitere Haushaltgerät 240 ähnlich oder gleich wie das Haushaltgerät 210 angesteuert wird. Hierzu weist das weitere Haushaltgerät 240 lediglich beispielhaft die gleichen Einrichtungen 220, 225, 230, 235 wie das Haushaltgerät 210 auf, wobei diese aus Platzgründen in dem weiteren Haushaltgerät 240 nicht gezeigt sind.

Mit anderen Worten ausgedrückt wird die Entnahme des Lagerbehälters 100 aus dem Haushaltgerät 210 erkannt. Der Lagerbehälter 100 wird dann von dem weiteren Haushaltgerät 240 erkannt, beispielsweise beim Einlegen des Lagerbehälters 100 in das weitere Haushaltgerät 240. Daraufhin erfolgt beispielsweise eine automatisierte Einstellung der Temperatur und oder der Dauer für das Erwärmen. Wenn von den weiteren Haushaltgerät 240 ein Vorhandensein des Deckels in dem weiteren Haushaltgerät 240 erfasst wird, schaltet sich Haushaltgerät 240 erst gar nicht ein, damit der Deckel mit implementierter Sensorik bzw. Chip nicht zerstört wird. Die Daten von dem weiteren Haushaltgerät 240 werden in der externen Zentraleinrichtung 215 gespeichert und sind remote von einem Endgerät abrufbar, beispielsweise von dem mobilen Endgerät 205.

In anderen Worten ausgedrückt zeigt Figur 2 eine Datenübertragung auf Behälter, die über verschiedene Elektrogroßgeräte abgerufen werden können. Auf diese Weise wird ein automatisiertes Erstellen eines Warenwirtschaftssystems, ein optimales Aufwärmen von Speisen sowie ein Schutz von Behältern vor Zerstörung durch Wärme möglich.

Nachfolgend wird der hier vorgestellte Ansatz erläutert: Daten, wie Rezept, Zutaten, etc., werden mittels des mobilen Endgeräts 205 über UWB auf den Lagerbehälter 100 ggf. automatisiert, übertragen. Der Lagerbehälter 100 mit implementierten Daten wird von dem Haushaltgerät 210 erkannt und lokalisiert und mit weiteren Daten angereichert, zum Beispiel Ort, Zeit, etc. Diese Daten, wie Rezept, Zutaten, Warenwirtschaftssystem, etc., werden in der externen Zentraleinrichtung 215 gespeichert und sind remote von einem Endgerät abrufbar Die Entnahme des Lagerbehälters 100 aus dem Haushaltgerät 210 mit implementierten Daten wird erkannt. Der Lagerbehälter 100 mit implementierten Daten wird von dem weiteren Haushaltgerät 240 erkannt. Parameter zum Erwärmen der Speise werden automatisiert eingestellt. Das weitere Haushaltgerät 240, also Backofen oder Mikrowelle etc. schaltet sich erst dann ein, wenn sich der Deckel nicht mehr auf dem Lagerbehälter 100 befindet, damit Deckel mit implementierter Sensorik / Chips nicht zerstört wird.

Ein Nutzer bereitet zum Beispiel eine Lasagne zu. Rezept und Zutaten werden über das mobile Endgerät 205 auf den Lagerbehälter 100 übertragen. Nach der Zubereitung wird die Lasagne oder Reste der Lasagne im Gefrierfach des Haushaltgeräts 210 gelagert. Das Gefrierfach erkennt den Lagerbehälter 100 und weiß, dass sich dort Lasagne drin befindet.

Die Daten werden durch den konkreten Lagerort, zum Beispiel erste Schublade von oben - Gefrierfach - Lokalisierung erfolgt ebenfalls über UWB, und Zeitstempel, Datum ggf. mit Uhrzeit, angereichert. Dieser angereicherte Datensatz wird in der externen Zentraleinrichtung 215 gespeichert und weiterverarbeitet. Dadurch bekommt der Nutzer über sein Endgerät 205 eine Übersicht darüber, was sich in seinem Gefrierfach befindet und wann dies eingelagert wurde. Auch hier ist möglich, dass diese Daten ggf. manuell angereichert werden, zum Beispiel bis wann der Nutzer die eingelagerte Speise verzehren möchte. Entnimmt der Nutzer die Lasagne aus dem Tiefkühlbereich, wird dies vom Haushaltgerät 210 erkannt. Das Warenwirtschaftssystem wird automatisiert aktualisiert. Wird die Lasagne nun in den Backofen oder die Mikrowelle gestellt, wird der Lagerbehälter 100 auch in diesem weiteren Haushaltgerät 240 erkannt. Durch einen Abgleich der Zeitstempel Entnahme aus dem Kühlgerät und Erkennung im Backofen oder Mikrowelle wird ermittelt, wie lange die gefrorene Lasagne aufgetaut wurde. Dadurch stellt das weitere Haushaltgerät 240, das die Lasagne aufwärmen soll, entsprechend automatisiert Temperatur und Dauer ein. Das weitere Haushaltgerät 240 schaltet sich aber erst dann ein, wenn der Deckel mit der enthaltenen Elektronik abgenommen wurde, so dass dieser nicht zerstört wird. Durch dieses System wird ein Eco-System aufgebaut, das den Nutzern oder Nutzerinnen durch verschiedene Automatismen der Alltag erleichtert.

Figur 3 zeigt ein Ablaufdiagramm eines Ausführungsbeispiels eines Verfahrens 300 zum Betreiben eines Lagerbehälters. Der Lagerbehälter ähnelt oder entspricht dem Lagerbehälter aus einer der vorstehend beschriebenen Figuren.

Das Verfahren 300 umfasst einen Schritt 305 des Aufbauens einer Drahtlosverbindung zwischen dem mobilen Endgerät und dem Lagerbehälter. Zusätzlich umfasst das Verfahren 300 einen Schritt 305 des Empfangens von Daten von dem mobilen Endgerät, insbesondere wobei die Daten eine Information über in dem Lagerbehälter zu lagernde und/oder lagernde Lebensmittel repräsentiert. Zusätzlich umfasst das Verfahren 300 einen Schritt 315 des Speicherns der Daten in einer Speichereinrichtung des Lagerbehälters

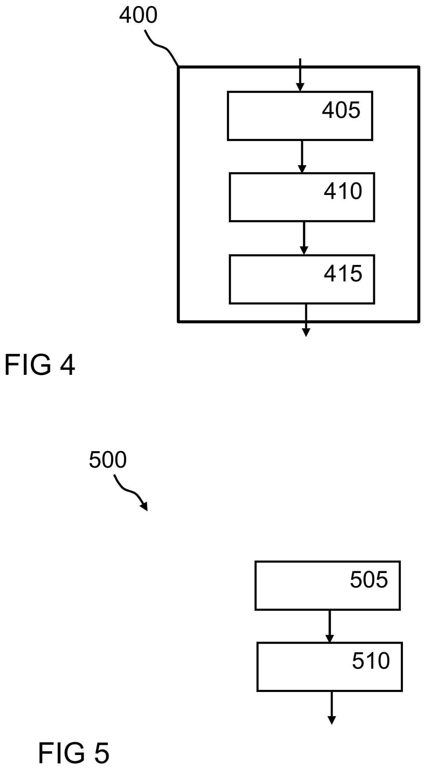

Figur 4 zeigt ein Blockschaltbild eines Ausführungsbeispiels einer Steuereinheit 400 zum Betreiben eines Lagerbehälters. Die Steuereinheit 400 ist ausgebildet, um das Verfahren aus Figur 3 oder ein ähnliches Verfahren anzusteuern und/oder auszuführen.

Die Steuereinheit 400 weist hierzu eine Einheit 405 zum Aufbauen einer Drahtlosverbindung zwischen dem mobilen Endgerät und dem Lagerbehälter und eine Einheit 410 zum Empfangen von Daten von dem mobilen Endgerät auf.

Figur 5 zeigt ein Ablaufdiagramm eines Ausführungsbeispiels eines Verfahrens 500 zum Betreiben eines mobilen Endgeräts. Das mobile Endgerät ähnelt oder entspricht dem mobilen Endgerät aus einer der vorstehend beschriebenen Figuren.

Das Verfahren 500 umfasst einen Schritt 505 des Aufbauens einer Drahtlosverbindung zwischen dem mobilen Endgerät und dem Lagerbehälter. Zusätzlich umfasst das Verfahren 500 einen Schritt 510 des Ausgebens von Daten an den Lagerbehälter, insbesondere wobei die Daten eine Information über in dem Lagerbehälter zu lagernde und/oder lagernde Lebensmittel repräsentiert, um die Daten in einer Speichereinrichtung des Lagerbehälters abzuspeichern.

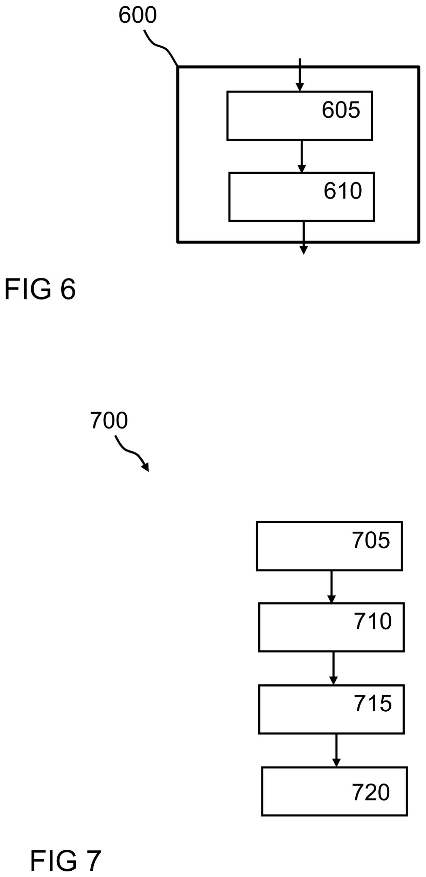

Figur 6 zeigt ein Blockschaltbild eines Ausführungsbeispiels einer Steuereinheit 600 zum Betreiben eines mobilen Endgeräts. Die Steuereinheit 600 ist ausgebildet, um das Verfahren aus Figur 5 oder ein ähnliches Verfahren anzusteuern und/oder auszuführen

Die Steuereinheit 600 weist hierzu eine Einheit 605 zum Aufbauen einer Drahtlosverbindung zwischen dem mobilen Endgerät und dem Lagerbehälter und eine Einheit 610 zum Ausgeben von Daten an den Lagerbehälter auf.

Figur 7 zeigt ein Ablaufdiagramm eines Ausführungsbeispiels eines Verfahrens 700 zum Betreiben eines Haushaltgeräts. Das Haushaltgerät ähnelt oder entspricht dem Haushaltgerät aus einer der vorstehend beschriebenen Figuren.

Das Verfahren 700 umfasst einen Schritt 705 des Aufbauens einer Drahtlosverbindung zwischen dem Lagerbehälter und dem Haushaltgerät. Zusätzlich umfasst das Verfahren 700 einen Schritt 710 des Empfangens von Daten von der Kommunikationseinrichtung des Lagerbehälters. Zusätzlich umfasst das Verfahren 700 einen Schritt 715 des Veränderns von mindestens einem Parameter des Haushaltgeräts ansprechend auf die empfangenen Daten. Zusätzlich oder alternativ umfasst das Verfahren 700 einen Schritt 720 des Ansteuerns des Haushaltgeräts unter Verwendung der empfangenen Daten.

Gemäß einem Ausführungsbeispiel wird der Schritt 720 des Ansteuerns ausgeführt, wenn eine die Speichereinrichtung des Lagerbehälters umfassende Komponente nicht in dem Haushaltgerät angeordnet ist. Beispielsweise umfasst der Schritt 720 des Ansteuerns eine Parametrierung einer Leistungsabgabe eines als Mikrowellen und/oder Backofen ausgebildeten Haushaltgeräts.

Gemäß einem Ausführungsbeispiel umfasst der Schritt 715 des Veränderns ein Anzeigen einer die Daten repräsentierende Information auf einem Display des Haushaltgeräts. Gemäß einem weiteren Ausführungsbeispiel umfasst der Schritt 715 des Veränderns ein Übertragen von weiteren Daten an den Lagerbehälter, um die weiteren Daten in die Speichereinrichtung des Lagerbehälters abzuspeichern.

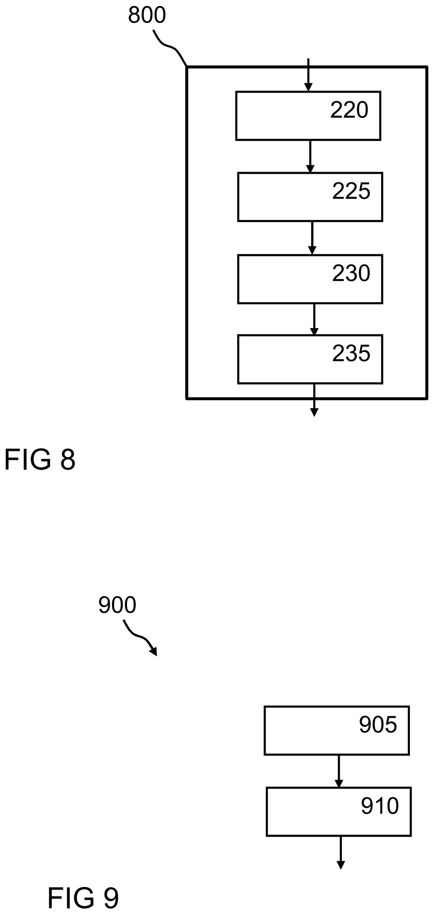

Figur 8 zeigt ein Blockschaltbild eines Ausführungsbeispiels einer Steuereinheit 800 zum Betreiben eines Haushaltgeräts. Die Steuereinheit 800 ist ausgebildet, um das Verfahren aus Figur 7 oder ein ähnliches Verfahren anzusteuern und/oder auszuführen

Die Steuereinheit 800 weist hierzu die Einrichtung 220 zum Aufbauen einer Drahtlosverbindung zwischen dem Lagerbehälter und dem Haushaltgerät, die Einrichtung 225 zum Empfangen von Daten von der Kommunikationseinrichtung des Lagerbehälters und die Einrichtung 230 zum Verändern von mindestens einem Parameter des Haushaltgeräts ansprechend auf die empfangenen Daten auf. Zusätzlich oder alternativ weist die Steuereinheit 800 die Einrichtung 235 zum Ansteuern des Haushaltgeräts unter Verwendung der empfangenen Daten auf.

Figur 9 zeigt ein Ablaufdiagramm eines Ausführungsbeispiels eines Verfahrens 900 zum Betreiben eines Haushaltgerätesystems. Das Haushaltgerätesystem ähnelt oder entspricht dem Haushaltgerätesystem aus einer der vorstehend beschriebenen Figuren.

Das Verfahren 900 umfasst einen Schritt 905 des Einlesens von Daten von einem mobilen Endgerät und/oder von einem Haushaltgerät und/oder einem weiteren Haushaltgerät. Zusätzlich umfasst das Verfahren 900 einen Schritt 910 des Ausgebens von von dem mobilen Endgerät empfangene Daten an das Haushaltgerät und/oder Ausgeben von von dem Haushaltgerät empfangene Daten an das mobile Endgerät und/oder von von dem weiteren Haushaltgerät empfangene Daten an das mobile Endgerät.

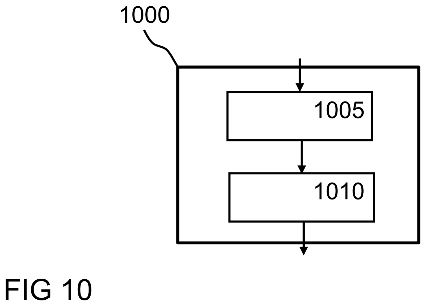

Figur 10 zeigt ein Blockschaltbild eines Ausführungsbeispiels einer Steuereinheit 1000 zum Betreiben eines Haushaltgerätesystems. Die Steuereinheit 1000 ist ausgebildet, um das Verfahren aus Figur 9 oder ein ähnliches Verfahren anzusteuern und/oder auszuführen

Die Steuereinheit 1000 weist eine Einheit 1005 zum Einlesen von Daten von einem mobilen Endgerät und/oder von einem Haushaltgerät und/oder einem weiteren Haushaltgerät auf. Zusätzlich weist die Steuereinheit 10000 eine Einheit 1010 zum Ausgeben von von dem mobilen Endgerät empfangene Daten an das Haushaltgerät und/oder Ausgeben von von dem Haushaltgerät empfangene Daten an das mobile Endgerät und/oder von von dem weiteren Haushaltgerät empfangene Daten an das mobile Endgerät auf.

## Patentansprüche

1. Verfahren (300) zum Betreiben eines Lagerbehälters (100), wobei der Lagerbehälter (100) drahtlos mit einem mobilen Endgerät (205) koppelbar oder gekoppelt ist, wobei das Verfahren (300) die folgenden Schritte umfasst:
Aufbauen (305) einer Drahtlosverbindung zwischen dem mobilen Endgerät (205) und dem Lagerbehälter (100);
Empfangen (310) von Daten von dem mobilen Endgerät (205), insbesondere wobei die Daten eine Information über in dem Lagerbehälter (100) zu lagernde und/oder lagernde Lebensmittel repräsentiert; und
Speichern (315) der Daten in einer Speichereinrichtung (115) einer Komponente des Lagerbehälters (100).

2. Lagerbehälter (100) zum Lagern von Lebensmitteln, wobei der Lagerbehälter (100) die folgenden Merkmale aufweist:
eine Speichereinrichtung (115) zum Speichern von Daten; und
eine Kommunikationseinrichtung (120), die ausgebildet ist, um eine Drahtlosverbindung mit einem mobilen Endgerät (205) und/oder einem Haushaltgerät (210) aufzubauen, um die in der Speichereinrichtung (115) gespeicherten Daten an das Haushaltgerät (210) auszugeben und/oder um von dem mobilen Endgerät (205) empfangene Daten in der Speichereinrichtung (115) abzuspeichern.

3. Verfahren (500) zum Betreiben eines mobilen Endgeräts (205), das drahtlos mit einem Lagerbehälter (100) gemäß Anspruch 2 koppelbar oder gekoppelt ist, wobei das Verfahren (500) die folgenden Schritte umfasst:
Aufbauen (505) einer Drahtlosverbindung zwischen dem mobilen Endgerät (205) und dem Lagerbehälter (100); und
Ausgeben (510) von Daten an den Lagerbehälter (100), insbesondere wobei die Daten eine Information über in dem Lagerbehälter (100) zu lagernde und/oder lagernde Lebensmittel repräsentiert, um die Daten in einer Speichereinrichtung (115) des Lagerbehälters (100) abzuspeichern.

4. Mobiles Endgerät (205) zum Übertragen von Daten an einen Lagerbehälter (100) gemäß Anspruch 2, wobei das mobile Endgerät (205) die folgenden Merkmale aufweist:
eine Einrichtung zum Aufbauen einer Drahtlosverbindung zwischen dem mobilen Endgerät (205) und dem Lagerbehälter (100); und
eine Einrichtung zum Ausgeben von Daten an den Lagerbehälter (100), insbesondere wobei die Daten eine Information über in dem Lagerbehälter (100) zu lagernde und/oder lagernde Lebensmittel repräsentiert, um die Daten in einer Speichereinrichtung (115) des Lagerbehälters (100) abzuspeichern.

5. Verfahren (700) zum Betreiben eines Haushaltgeräts (210), wobei das Haushaltgerät (210) drahtlos mit einem Lagerbehälter (100) gemäß Anspruch 2, koppelbar ist, wobei das Verfahren (700) die folgenden Schritte umfasst:
Aufbauen (705) einer Drahtlosverbindung zwischen dem Lagerbehälter (100) und dem Haushaltgerät (210);
Empfangen (710) von Daten von der Kommunikationseinrichtung (120) des Lagerbehälters (100); und
Verändern (715) von mindestens einem Parameter des Haushaltgeräts (210) ansprechend auf die empfangenen Daten; und/oder
Ansteuern (720) des Haushaltgeräts (210) unter Verwendung der empfangenen Daten.

6. Verfahren (700) gemäß Anspruch 5, wobei der Schritt (720) des Ansteuerns ausgeführt wird, wenn eine die Speichereinrichtung (115) des Lagerbehälters (100) umfassende Komponente nicht in dem Haushaltgerät (210) angeordnet ist.

7. Verfahren (700) gemäß einem der Ansprüche 5 bis 6, wobei der Schritt (720) des Ansteuerns eine Parametrierung einer Leistungsabgabe eines als Mikrowellen und/oder Backofen ausgebildeten Haushaltgeräts (210) umfasst.

8. Verfahren (700) gemäß einem der Ansprüche 5 bis 7, wobei der Schritt (715) des Veränderns ein Anzeigen einer die Daten repräsentierende Information auf einem Display des Haushaltgeräts (210) umfasst.

9. Verfahren (700) gemäß einem der Ansprüche 5 bis 8, wobei der Schritt (715) des Veränderns ein Übertragen von weiteren Daten an den Lagerbehälter (100) umfasst, um die weiteren Daten in die Speichereinrichtung (115) des Lagerbehälters (100) abzuspeichern.

10. Haushaltgerät (210) zum Aufnehmen eines Lagerbehälters (100) gemäß Anspruch 2, wobei das Haushaltgerät (210) die folgenden Merkmale aufweist:
eine Einrichtung (220) zum Aufbauen einer Drahtlosverbindung zwischen dem Lagerbehälter (100) und dem Haushaltgerät (210 240);
eine Einrichtung (225) zum Empfangen von Daten von der Kommunikationseinrichtung (120) des Lagerbehälters (100); und
eine Einrichtung (230) zum Verändern von mindestens einem Parameter des Haushaltgeräts (210) ansprechend auf die empfangenen Daten; und/oder
eine Einrichtung (235) zum Ansteuern des Haushaltgeräts (210) unter Verwendung der empfangenen Daten.

11. Verfahren (900) zum Betreiben eines Haushaltgerätesystems (200) unter Verwendung einer externen Zentraleinrichtung (215), wobei das Verfahren (900) die folgenden Schritte umfasst:
Einlesen (905) von Daten von dem mobilen Endgerät (205) gemäß Anspruch 4 und/oder von dem Haushaltgerät (210) gemäß Anspruch 10 und/oder einem weiteren Haushaltgerät (240) gemäß Anspruch 10; und
Ausgeben (910) von von dem mobilen Endgerät (205) empfangene Daten an das Haushaltgerät (210) und/oder Ausgeben von von dem Haushaltgerät (210) empfangene Daten an das mobile Endgerät (205) und/oder von von dem weiteren Haushaltgerät (240) empfangene Daten an das mobile Endgerät (205).

12. Externe Zentraleinrichtung (215) zum Betreiben eines Haushaltgerätesystems (200) mit einem mobilen Endgerät (205) gemäß Anspruch 4 und mindestens einem Haushaltgerät (210) gemäß Anspruch 10.

13. Steuereinheit (400; 600; 800; 1000), die ausgebildet ist, um die Schritte mindestens eines der Verfahren (300; 500; 700; 900) gemäß einem der vorangegangenen Ansprüche in entsprechenden Einheiten auszuführen und/oder anzusteuern.

14. Computer-Programmprodukt mit Programmcode zur Durchführung mindestens einer der Verfahren (300; 500; 700; 900) nach einem der vorangegangenen Ansprüche, wenn das Computer-Programmprodukt auf einer Steuereinheit gemäß Anspruch 13 ausgeführt wird.

15. Maschinenlesbares Speichermedium, auf dem das Computerprogramm nach Anspruch 14 gespeichert ist.
